# EUROPEAN PATENT APPLICATION

(11) **EP 2 996 218 A1**
(43) Date of publication of application: **16.03.2016**
(21) Application number: 14794367.4
(22) Date of filing: 24.04.2014
(51) Int. Cl.: H02J 7/34, H02J 7/00, H02J 7/10, H02J 9/06

(54) **STORAGE CELL MANAGING DEVICE**

(30) Priority: 10.05.2013 JP 2013100521
(71) Applicant: Panasonic Intellectual Property Management Co., Ltd., Osaka-shi, Osaka 540-6207 (JP)
(72) Inventor: SATOMI, Toshiyuki, Osaka-shi, Osaka 540-6207 (JP); ADACHI, Masakazu, Osaka-shi, Osaka 540-6207 (JP)
(74) Representative: Appelt, Christian W.
(86) International application number: PCT/JP2014/002324
(87) International publication number: WO 2014/181521

(57) **Abstract**

A storage cell management apparatus includes a power conversion unit, a determination unit, an allocation setting unit and a distribution unit. The power conversion unit is configured to perform an operation of storing power in a storage cell and an operation of discharging power from the storage cell. The determination unit is configured to determine an application of power discharged from the storage cell as one of a plurality of applications. The allocation setting unit is configured to determine an upper limit of an amount of power that can be supplied to each application, using a distribution ratio determined for the plurality of applications. The distribution unit is configured to supply the power stored in the storage cell for the application determined by the determination unit, with the power not exceeding the upper limit determined by the allocation setting unit for the application.

## Description

### TECHNICAL FIELD

The present invention relates to, in general, a storage cell management apparatus, and more particularly to a storage cell management apparatus that controls charging and discharging of a storage cell.

### BACKGROUND ART

In recent years, installing a storage cell in a facility is proposed, and various applications of a storage cell installed in a facility are suggested. For example, techniques of using a secondary battery (storage cell) to backup electric power supply in the case of a failure of a main power supply, such as a commercial power supply, have been proposed (e.g. see JP 2009-148070 A (hereafter called "Document 1")). Document 1 discloses a technique to increase the charge amount in a secondary cell more than in the normal operation time when receiving a disaster occurrence forecast where stoppage of the main power supply is expected.

In the technique disclosed in Document 1, the application of the secondary cell is only the backup of a power supply, and other applications of the secondary cell are not especially considered.

### SUMMARY OF INVENTION

It is an object of the present invention to provide a storage cell management apparatus that effectively uses power of a storage cell considering applications of the storage cell.

A storage cell management apparatus according to the present invention includes: a power conversion unit configured to perform an operation of storing power in a storage cell and an operation of discharging power from the storage cell; a determination unit configured to determine an application of power discharged from the storage cell as one of a plurality of applications; an allocation setting unit configured to determine an upper limit of an amount of power that can be supplied to each of the plurality of applications, using a distribution ratio determined for the plurality of applications; and a distribution unit configured to supply the power stored in the storage cell for the application determined by the determination unit, with the power not exceeding the upper limit determined by the allocation setting unit for the application.

According to the present invention, an upper limit is determined for the power stored in the storage cell using a distribution ratio which is set for each application, and power is supplied to each application within the range determined by the upper limit. In other words, when the storage cell is used for a plurality of applications, the power stored in the storage cell can be distributed so that the amount of power required for each application can be supplied from the storage cell. As a result, a benefit arises where the power of the storage cell can be effectively used considering the applications of the storage cell.

### BRIEF DESCRIPTION OF DRAWINGS

Preferred embodiments of the present invention will be described in more detail. Other features and advantages of the present invention will become more apparent after reading the following detailed description along with the accompanying drawings:
FIG. 1 is a block diagram depicting a storage cell management apparatus according to an embodiment;
FIG. 2 is a diagram depicting an example of warning information in the storage cell management apparatus according to the embodiment;
FIG. 3 is a diagram depicting an example of using the storage cell management apparatus according to the embodiment; and
FIG. 4 is a diagram depicting another example using the storage cell management apparatus according to the embodiment.

### DESCRIPTION OF EMBODIMENTS

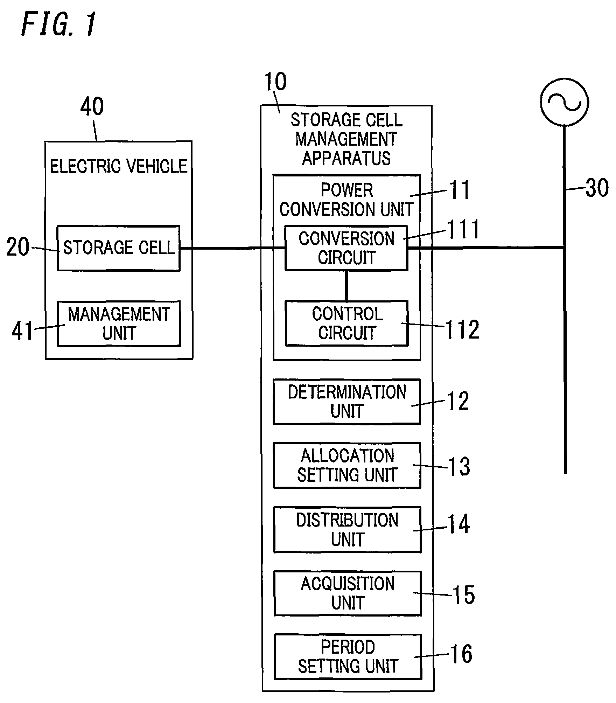

As depicted in FIG. 1, the storage cell management apparatus 10 of an embodiment described below includes a power conversion unit 11, a determination unit 12, an allocation setting unit 13, and a distribution unit 14. The power conversion unit 11 is configured to perform an operation of storing power in a storage cell 20, and an operation of discharging power from the storage cell 20. The determination unit 12 is configured to determine an application of power discharged from the storage cell 20 as one of a plurality of applications. The allocation setting unit 13 is configured to determine an upper limit of the amount of power that can be supplied to each of the plurality of applications using a distribution ratio determined for the plurality of applications. The distribution unit 14 is configured to supply the power stored in the storage cell 20 for the application determined by the determination unit 12, with the power not exceeding the upper limit determined by the allocation setting unit 13 for the application.

It is preferable that the storage cell management apparatus 10 includes an acquisition unit 15 configured to acquire warning information for disaster prevention, and a period setting unit 16 configured to determine a response period to respond to the warning information. It is preferable that the allocation setting unit 13 is configured to change the distribution ratio depending on whether the period is the response period or not.

It is preferable that the plurality of applications include a first application and a second application. The first application is an application of supplying power from the storage cell 20 to an electric load of a facility when power supply from the power system 30 stops. The second application is an application of supplying power from the storage cell 20 to an electric load, so as to decrease the amount of power which the facility receives from the power system 30.

It is preferable that the acquisition unit 15 and the allocation setting unit 13 perform the following operations. The acquisition unit 15 is configured to acquire the warning information for each region to which the electric utility supplies power. In a region of interest, which is a target of the warning information, the allocation setting unit 13 is configured to set the distribution ratio of the first application to be higher in the response period than in a period other than the response period, and set the distribution ratio of the second application to be lower in the response period than in a period other than the response period.

It is preferable that the acquisition unit 15 and the allocation setting unit 13 perform the following operations. The acquisition unit 15 is configured to acquire the warning information for each region to which the electric utility supplies power. In an external region which is not a target of the warning information, the allocation setting unit 13 is configured to set the distribution ratio of the first application to be lower in the response period than in a period other than the response period, and set the distribution ratio of the second application to be higher in the response period than in a period other than the response period.

It is preferable that the storage cell 20 is installed in an electric vehicle 40. In this case, the plurality of applications further include a third application of discharging power used for running the electric vehicle 40.

### (Embodiment)

In the following description, a region to which a warning for disaster prevention is issued is called a "region of interest", and a region to which a warning is not issued is called an "external region". There are two types of warning: a warning (including an advisory) that is issued before an event occurs (e.g. typhoon, tornado, thunder, heavy snow); and a warning that is issued after an event occurred since prediction of an event is difficult (e.g. eruption, earthquake).

These events could damage the power generation facility or power transmission facility. Therefore in a region for which a warning is issued, a facility which has a power storage apparatus would increase the charge amount in preparation for a power failure, or a facility which has an electric vehicle 40 would increase the charge amount for running the vehicle. Further, if the facility uses the power of the storage cell 20 installed in the electric vehicle 40, the charge amount of the storage cell 20 would be increased in case of a power failure, just like the case of the power storage apparatus.

Normally a warning for disaster prevention is issued to each regional unit. On the other hand, a regional unit used by the electric utility normally does not match with the regional unit to which a warning is issued. Therefore in the following description, it is assumed that a region of interest based on the demarcation of the electric utility is set to include a region to which a warning is issued.

As depicted in FIG. 1, the storage cell management apparatus 10 according to this embodiment includes the power conversion unit 11 that performs an operation of charging power to the storage cell 20 (charging), and an operation of discharging power from the storage cell 20 (discharging). Besides the power conversion unit 11, the storage cell management apparatus 10 includes the determination unit 12, the allocation setting unit 13, and the distribution unit 14 as the major composing elements.

In this embodiment, the storage cell 20 is assumed to be installed in an electric vehicle 40. Even if the storage cell 20 is installed in a power storage apparatus installed in the power facility, the technique to be described below can be applied, except in the case when the power of the storage cell 20 is used for running the electric vehicle 40. The electric vehicle 40 in which the storage cell 20 is installed is an electric car, hybrid car, electric motorcycle or the like. The electric vehicle 40 includes a management unit 41 which has a function to collect information on the storage cell 20, and a function to communicate with the storage cell management apparatus 10.

The management unit 41 holds information to identify the storage cell 20 (e.g. manufacturer, model number) as information on the storage cell 20, and collects information on the operation of the storage cell 20 (e.g. residual capacity, terminal voltage, number of times of charging/discharging, temperature). This information is transferred to the storage cell management apparatus 10 by the management unit 41 communicating with the storage cell management apparatus 10. The management unit 41 also has a function to notify the storage cell management apparatus 10 of an abnormality when an abnormality is generated in the storage cell 20.

The power conversion unit 11 includes a conversion circuit 111 and a control circuit 112. The conversion circuit 111 has a function of receiving power to be stored in the storage cell 20, from the power system 30, and a function of supplying power discharged from the storage cell 20 to the power system 30. The control circuit 112 controls the operation of the conversion circuit 111.

The power conversion unit 11 has a function of converting the AC power, which is supplied from the power system 30, into DC power, and charging the storage cell 20 using this DC power. The power conversion unit 11 also has a function of generating AC power, which is equivalent to the AC power of the power system 30, from the power stored in the storage cell 20. In other words, the power conversion unit 11 generates AC power having the same parameters (e.g. effective values of frequency and voltage) as the AC power of the power system 30, using the power stored in the storage cell 20. The AC power generated by the power conversion unit 11 is supplied to an electric load (not illustrated) used by the facility. The power system 30 here includes a wiring network in the facility. Furthermore, the power conversion unit 11 functions as a power conditioner, as clarified in the above description.

In the AC power that the power conversion unit 11 generated using the power stored in the storage cell 20, a reverse power flow to the power system 30 (excluding the distribution network in the facility) is prohibited at the moment. Therefore the AC power generated by the power conversion unit 11 is compared with the power which the electric load would consume, and the output of the AC power to the power system 30 of the power conversion unit 11 is adjusted so that a reverse power flow to the power system 30 is not generated.

When the storage cell 20 is charged, the control circuit 112 adjusts the charge current according to the characteristics of the storage cell 20. When the storage cell 20 is discharged, the control circuit 112 adjusts the discharge current according to the power which the electric load will consume, the residual capacity of the storage cell 20 and the like.

In this embodiment, the applications of power discharged from the storage cell 20 are classified in the following three types. The first application is supplying power to the electric load of the facility from the storage cell 20, instead of the power system 30, when the power supply from the power system 30 is stopped (power failure). The second application is supplying power from the storage cell 20 when the amount of power, which the facility receives from the power system 30, is limited, so that the amount of power received from the power system 30 is decreased. The third application is using the power of the storage cell 20 for running the electric vehicle 40.

The first application is a state of supplying the power of the storage cell 20 to the electric load of the facility, without receiving power from the power system 30. The operation in this state is called an "independent operation". In the independent operation, the AC power generated by the power conversion unit 11 is used only within the facility. Since the charge amount of the storage cell 20 is limited, it is preferable that the power generated by the power conversion unit 11 is not supplied to all the electric loads of the facility, but is supplied only to a specific electric load.

The second application is effective when a power saving request (demand response) is received from the electric utility. The second application is also effective when the contract with the electric utility is such that an upper limit (set value) of the amount of power for each 30 minutes is determined, and the unit price of the electric charge increases if the amount of power received from the power system 30 exceeds the upper limit. When these conditions are set, the amount of power received from the power system 30 decreases if supplemental power is supplied from the storage cell 20.

The determination unit 12 disposed in the storage cell management apparatus 10 has a function to discern the application of the power discharged from the storage cell 20. In the first application and the second application, power is discharged from the storage cell 20 to the power system 30 via the power conversion unit 11. Therefore if a state when the power conversion unit 11 is used for discharging power from the storage cell 20, or a state when the power is supplied from the power conversion unit 11 to an electric load, is recognized, the determination unit 12 determines that the power of the storage cell 20 is being used for the first application or the second application. In other words, the determination unit 12 determines an application of the power discharged from the storage cell 20, as one of the plurality of applications.

In addition to this recognition of the state, the determination unit 12 determines that the application is the first application if the power system 30 is in a power failure state, and determines that the application is the second application if the power system 30 is not in a power failure state. When the power is supplied to the motor of the electric vehicle 40 without operation of the power conversion unit 11, the determination unit 12 determines that the application is the third application, since the power of the storage cell 20 is used for running the electric vehicle 40 in the third application.

The allocation setting unit 13 determines an upper limit of the amount of power that can be supplied to each application by using a distribution ratio determined for the plurality of applications described above. The power discharged from the storage cell 20 is used for each application without exceeding the upper limit determined by the allocation setting unit 13 for each application. In other words, the distribution unit 14 measures the amount of power for each application determined by the determination unit 12, and allows the use of power for each application until the measured amount of power reaches the upper limit determined for each application. This means that the distribution unit 14 allows supplying the power stored in the storage cell 20 for each application determined by the determination unit 12, with the power not exceeding the upper limit determined by the allocation setting unit 13 for the application. For example, if the applications of the power discharged from the storage cell 20 are classified into the first application, the second application and the third application, then the distribution unit 14 is configured to operate as follows. The distribution unit 14 measures the amount of power used for the first application, out of the power discharged from the storage cell 20, at predetermined time intervals, and allows using the power discharged from the storage cell 20 for the first application until the measured amount of power reaches the upper limit determined for the first application. The distribution unit 14 measures the amount of power used for the second application, out of the power discharged from the storage cell 20, at predetermined time intervals, and allows using the power discharged from the storage cell 20 for the second application until the measured amount of power reaches the upper limit determined for the second application. The distribution unit 14 measures the amount of power used for the third application, out of the power discharged from the storage cell 20, at predetermined time intervals, and allows using the power discharged from the storage cell 20 for the third application until the measured amount of power reaches the upper limit determined for the third application.

In the storage cell management apparatus 10, the configuration other than the power conversion unit 11 is a hardware configuration of the device that includes a processor which operates according to the program. This type of device is typically a microcomputer that integrates a processor and a memory, but may be a processor to which a memory is attached.

In this embodiment, there are three types of applications for which the power of the storage cell 20 is used, hence the distribution ratio is set for each of the three types of applications. The allocation setting unit 13 does not set the fixed distribution ratio, instead it dynamically sets the distribution ratio according to other conditions.

For example, normal operation time, it is preferable to set the distribution ratio of the amount of power used for the second application to high. When a warning is issued, where priority is set for safety over cost performance, it is preferable to set the distribution ratio of the amount of power used for the first or third application to be higher than the amount of power used for the second application.

In order to change the distribution ratio like this when a warning is issued, the storage cell management apparatus 10 includes an acquisition unit 15 that acquires warning information for disaster prevention, and a period setting unit 16 that determines a response period to respond to the warning information. As a rule, the acquisition unit 15 acquires the warning information from another apparatus via telecommunications, such as the Internet. The warning information includes a type of warning, a region to which a warning is issued, and a date and time thereof.

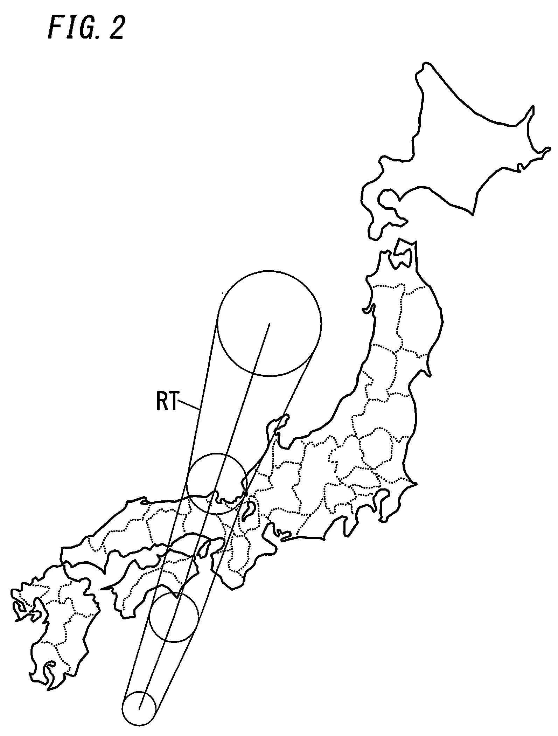

For example, when a typhoon is the event for which a warning is issued, a course RT of the typhoon is predicted, as shown in FIG. 2, and the date and time when the typhoon will pass through each location on the course RT is predicted. Based on such a prediction, a warning for a storm, high tide or the like is issued for each region along the course RT. The circular partitions in FIG. 2 are the forecast circles, and the regions between the tangential lines of the adjacent forecast circles are regarded as the course RT in the example in FIG. 2.

In the case when the event for which a warning is issued is a typhoon, the acquisition unit 15 acquires the warnings related to the typhoon (e.g. storm warning, wave warning, high tide warning). The acquisition unit 15 also acquires the region for which the warning is issued and the date and time thereof. The period setting unit 16 determines the date and time when the warning is issued as the start point of the response period, and determines the time when the warning is cleared, for example, as the end point of the response period.

The period setting unit 16 may regard the date and time when the warning is issued as the start point of the response period, and estimate the end time of the response period according to the type of warning. For example, depending on the type of the issued warning, the result of the actual disaster may continue even after the warning is cleared, hence it is preferable to determine the end point of the response period separately.

Furthermore, the period setting unit 16 may set the start point and the end point of the response period based on the information on the event for which a warning may be issued before the acquisition unit 15 acquires the warning. For example, when the acquisition unit 15 acquires the course RT of the typhoon as an event for which a warning may be issued and the passing time in each region, the period setting unit 16 may estimate the region based on the course RT and estimate the response period based on the passing time.

If the response period can be set as mentioned above, it is preferable that the allocation setting unit 13 changes the distribution ratio depending on whether the period is the response period or not. It is preferable that the distribution ratio is changed between the region of interest and the external region.

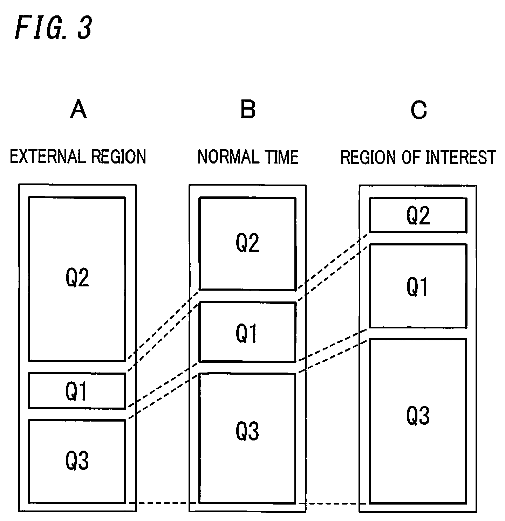

Fig. 3 shows an example of a distribution ratio set by the allocation setting unit 13. In FIG. 3, the distribution ratio is set based on the charge amount when the storage cell 20 is fully charged, or the predetermined charge amount in normal operation time as the normal state. If the distribution ratio is determined based on the fully charged state, the amount of power distributed to each application is set assuming that the storage cell 20 will be quickly charged to the fully charged state as the start point of the response period.

B of FIG. 3 shows an example of the distribution ratio in the normal operation time (period other than the response period). In the normal operation time, the amount of power Q1 used for the first application, the amount of power Q2 used for the second application, and the amount of power Q3 used for the third application are set to Q1: Q2: Q3 = 20: 30: 50, for example.

A of FIG. 3 shows an example of the distribution ratio for the external region in the response period, and C of FIG. 3 shows an example of the distribution ratio for the region of interest in the response period.

In the external region, as shown by A of FIG. 3, the distribution ratio is adjusted in the response period, so that the amount of power Q1 that can support the first application (feeding power during power failure) and the amount of power Q3 that can support the third application (running of electric vehicle 40) become lower than those in the normal operation time. In the response period, the amount of power Q2 that can support the second application (supplementing power) is higher than in the normal operation time. This is a processing based on the assumption that power will be shifted from the external region to the region of interest. In other words, by shifting power to the region of interest, the power supplied from the electric utility may be become insufficient in the external region, hence each facility discharges the power of the storage call 20 so as to decrease the amount of power received from the power system 30. In this case, the setting would be Q1: Q2: Q3 = 10: 50: 40, for example.

In the region of interest, on the other hand, as shown in C of FIG. 3, the distribution ratio is set in the response period so that the amount of power Q1 that can support the first application (feeding power during power failure) and the amount of power Q3 that can support the third application (running of electric vehicle 40) become higher than those in the normal operation time. In the response period, the amount of power Q2 that can support the second application (supplementing power) is lower than in the normal operation time. This is because in the response period, securing power required during a power failure, insuring a cruising range of the electric vehicle 40 for use during evacuation or the like has priority over cost performance issues. In this case, the setting would be Q1: Q2: Q3 = 30: 10: 60, for example.

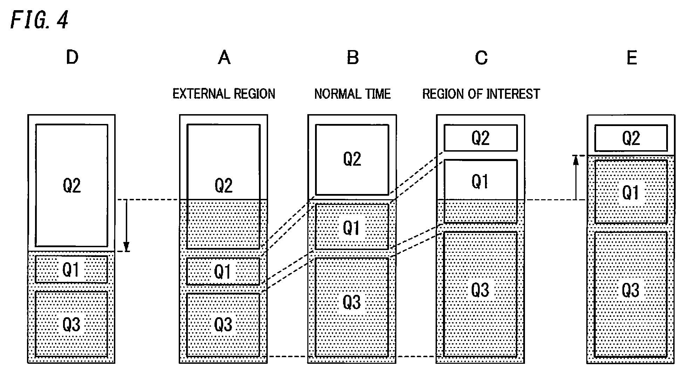

A storage cell 20, such as a lithium ion battery, is in a 60%-80% charged state in normal operation time, since the battery easily deteriorates if a fully charged state is always maintained. As mentioned above, the distribution ratio is determined based on the state when the storage cell 20 is fully charged, which means that the amount of power stored in the storage cell 20 in the normal operation time may be incapable of satisfying the above mentioned distribution ratios. In such a case, it is preferable to control the charging and discharging of the storage cell 20 so that the amount of power of the storage cell 20 satisfies the relationship shown in FIG. 4.

FIG. 4 shows a distribution example of the amount of power in a state when the storage cell 20 is not fully charged. The shaded portion in FIG. 4 indicates the charge amount (amount of charged power).

In the normal operation time (period other than the response period), the amounts of power Q1 and Q3 (other than the second application) are secured as shown in B of FIG. 4. Therefore if the above mentioned distribution ratio is applied, the charging rate of the storage cell 20 is 70%. In this case, the amount of power Q2 for the second application cannot be secured, which means that the charging rate must be increased when using the storage cell 20 for the second application as well.

On the other hand, in the response period, regardless whether the region of interest or the external region is considered, using power of the storage cell 20 for the first application and the third application has priority over using power for the second application to address cost performance or power conservation. In the external region, the amount of power prepared for the first application and the third application is low, as shown in A of FIG. 4, and it is sufficient if the charging rate satisfies 50% according to the above mentioned distribution ratio. In the region of interest, the amount of power prepared for the first application and the third application is high, as shown in C of FIG. 4, and the charging rate is 90% according to the above mentioned distribution ratio.

Therefore the storage cell 20 in the external region discharges the power to be used for the second application, and the storage cell 20 in the region of interest is charged so as to secure power to be used for the first application. In other words, in the response period, the charging rate is controlled to increase in the region of interest and to decrease in the external region. The storage cell 20 in the external region is discharged, and the storage cell 20 in the region of interest is charged. Therefore in the external region, the charging rate of the storage cell 20 is decreased from 70% to 50% as shown in D of FIG. 4, and in the region of interest, the charging rate of the storage cell 20 is increased from 70% to 90% as shown in E of FIG. 4.

By controlling the charging rates of the storage cells 20 in this way, power discharged from the storage cell 20 in the external region can be shifted to the region of interest, without increasing the amount of power received from the power system 30. In other words, the amount of power saved in the external region can be indirectly supplied to the region of interest.

The preferable embodiments of the present invention were described, but these embodiments can be modified and changed in various way by those skilled in the art without departing from the original spirit and scope of the present invention, that is, the scope of the Claims.

## Claims

1. A storage cell management apparatus, comprising:
a power conversion unit configured to perform an operation of storing power in a storage cell and an operation of discharging power from the storage cell;
a determination unit configured to determine an application of power discharged from the storage cell as one of a plurality of applications;
an allocation setting unit configured to determine an upper limit of an amount of power that can be supplied to each of the plurality of applications, using a distribution ratio determined for the plurality of applications; and
a distribution unit configured to supply the power stored in the storage cell for the application determined by the determination unit, with the power not exceeding the upper limit determined by the allocation setting unit for the application.

2. The storage cell management apparatus according to Claim 1, further comprising:
an acquisition unit configured to acquire warning information relating to disaster prevention; and
a period setting unit configured to determine a response period to respond to the warning information,
wherein the allocation setting unit is configured to change the distribution ratio, depending on whether a period is the response period or not.

3. The storage cell management apparatus according to Claim 2,
wherein the plurality of applications comprise:
a first application of supplying power from the storage cell to an electric load of a facility when power supply from a power system stops; and
a second application of supplying power from the storage cell to the electric load so as to decrease the amount of power, which the facility receives from the power system.

4. The storage cell management apparatus according to Claim 3,
wherein the acquisition unit is configured to acquire the warning information for each region to which an electric utility supplies power, and
wherein in a region of interest, which is a target of the warning information, the allocation setting unit is configured to set the distribution ratio of the first application to be higher in the response period than in a period other than the response period, and set the distribution ratio of the second application to be lower in the response period than in a period other than the response period.

5. The storage cell management apparatus according to Claim 3 or 4,
wherein the acquisition unit is configured to acquire the warning information for each region to which the electric utility supplies power, and
wherein in an external region which is not a target of the warning information, the allocation setting unit is configured to set the distribution ratio of the first application to be lower in the response period than in a period other than the response period, and set the distribution ratio of the second application to be higher in the response period than in a period other than the response period.

6. The storage cell management apparatus according to any one of Claims 1 to 5, wherein the storage cell is installed in an electric vehicle.

7. The storage cell management apparatus according to any one of Claims 3 to 5,
wherein the storage cell is installed in an electric vehicle, and
wherein the plurality of applications further comprise a third application of discharging power used for running of the electric vehicle.

## Amended claims

### Amended claims under Art. 19.1 PCT

**1.** (Amended) A storage cell management apparatus, comprising:
a power conversion unit configured to perform an operation of storing power in a storage cell and an operation of discharging power from the storage cell;
a determination unit configured to determine an application of power discharged from the storage cell as one of a plurality of applications;
an allocation setting unit configured to determine an upper limit of an amount of power that can be supplied to each of the plurality of applications, using a distribution ratio determined for the plurality of applications;
a distribution unit configured to supply the power stored in the storage cell for the application determined by the determination unit, with the power not exceeding the upper limit determined by the allocation setting unit for the application;
an acquisition unit configured to acquire warning information relating to disaster prevention; and
a period setting unit configured to determine a response period to respond to the warning information,
wherein the allocation setting unit is configured to change the distribution ratio, depending on whether the period is the response period or not,
wherein the plurality of applications comprise:
a first application of supplying power from the storage cell to an electric load of a facility when power supply from a power system stops; and
a second application of supplying power from the storage cell to the electric load so as to decrease the amount of power, which the facility receives from the power system,
wherein the acquisition unit is configured to acquire the warning information for each region to which an electric utility supplies power, and
wherein in a region of interest, which is a target of the warning information, the allocation setting unit is configured to set the distribution ratio of the first application to be higher in the response period than in a period other than the response period, and set the distribution ratio of the second application to be lower in the response period than in a period other than the response period.

**2.** (Canceled)

**3.** (Canceled)

**4.** (Canceled)

**5.** (Amended) The storage cell management apparatus according to Claim 1,
wherein the acquisition unit is configured to acquire the warning information for each region to which the electric utility supplies power, and
wherein in an external region which is not the target of the warning information, the allocation setting unit is configured to set the distribution ratio of the first application to be lower in the response period than in a period other than the response period, and set the distribution ratio of the second application to be higher in the response period than in a period other than the response period.

**6.** (Amended) The storage cell management apparatus according to Claim 1 or 5, wherein the storage cell is installed in an electric vehicle.

**7.** (Amended) The storage cell management apparatus according to Claim 1 or 5,
wherein the storage cell is installed in an electric vehicle, and
wherein the plurality of applications further comprise a third application of discharging power used for running of the electric vehicle.
